# EUROPEAN PATENT APPLICATION

(11) **EP 4 790 741 A1**
(43) Date of publication of application: **12.08.2026**
(21) Application number: 26156859.6
(22) Date of filing: 06.02.2026
(51) Int. Cl.: H01J 49/00

(54) **DIRECTED ENERGY BEAM IONIZATION WITH DATA INDEPENDENT ANALYSIS TO ENABLE LOCALIZATION AND IDENTIFICATION OF COMPOUNDS**

(30) Priority: 06.02.2025 US 202563755236 P; 29.05.2025 US 202563813721 P
(71) Applicant: Thermo Finnigan LLC, San Jose, CA 95134 (US)
(72) Inventor: HENRICH, Christoph, Bremen (DE); PASCHKE, Carmen, Bremen (DE); STRUPAT, Kerstin, Harpstedt (DE)
(74) Representative: Boult Wade Tennant LLP

(57) **Abstract**

A method of identifying compounds in a sample includes applying a focused ionizing beam to an immobilized sample to ionize a plurality of spots within a plurality of pixels of the sample; performing full mass scan (MS1) of sample ions from a first spot within each of the plurality of pixels; fragmenting ions within a mass window and obtain fragment masses from a plurality of mass windows from the plurality of spots within the plurality of pixels; identifying compounds and locations within the immobilized sample using the fragment masses and the pixel location data.

## Description

### FIELD

The present disclosure relates generally to mass spectrometry and, more particularly, to mass spectrometry imaging techniques for spatially resolved analysis of samples. The subject matter described herein is directed to methods, systems, and data processing techniques for acquiring and analyzing mass spectrometry imaging data using focused ionizing beams and data-independent fragment ion acquisition to enable localization and identification of compounds within a sample.

### BACKGROUND

Mass spectrometry imaging (MSI) is a technique that enables spatially resolved chemical analysis of samples by acquiring mass spectra at multiple locations across a sample surface. MSI has been applied in a variety of fields, including biology, medicine, and materials science, to study the spatial distribution of chemical compounds within complex samples such as tissue sections, cells, and other heterogeneous materials.

In many MSI implementations, focused ionizing beams, such as laser beams used in matrix-assisted laser desorption/ionization (MALDI) and related techniques, are scanned across a sample to generate ions from discrete spatial locations. Full mass spectra acquired at each location can be used to generate ion images representing the spatial distribution of detected ions. The spatial resolution of such images is influenced by factors including beam size, sampling density, and acquisition time.

While full mass spectra provide information about precursor ion masses and relative abundances, confident identification of compounds often relies on fragment ion information obtained through tandem mass spectrometry. In imaging applications, acquiring fragment ion spectra for each spatial location can be challenging due to limited sample material available per location, increased acquisition time, and potential reductions in spatial resolution or signal quality. As a result, some imaging workflows rely primarily on full mass spectra or employ targeted or data-dependent fragmentation strategies, which may provide limited coverage or incomplete fragment ion information.

Data-independent acquisition (DIA) techniques have been developed to provide systematic fragmentation of ions across defined mass ranges. However, applying DIA techniques directly at every pixel in an MSI experiment can exacerbate tradeoffs between spatial resolution, acquisition speed, and spectral completeness. Consequently, there remains a need for MSI approaches that provide improved compound identification while preserving spatial resolution and efficient data acquisition.

### SUMMARY

The present disclosure provides techniques for mass spectrometry imaging that enable spatially resolved analysis and improved identification of compounds within a sample. The disclosed techniques address challenges associated with acquiring fragment ion information in imaging experiments while preserving spatial resolution and efficient data acquisition.

In accordance with one aspect, a method is provided in which a focused ionizing beam is applied to an immobilized sample to ionize material at multiple spatial locations defining a plurality of pixels. For each pixel, at least one full mass spectrum is acquired to obtain precursor ion information. Fragment ion spectra are acquired using data-independent isolation mass windows from additional ionization events, wherein fewer than all predefined isolation mass windows are acquired at any individual pixel. The isolation mass windows are distributed across multiple pixels such that, within a region of the sample comprising a plurality of pixels, fragment ion spectra corresponding to all predefined isolation mass windows are acquired.

In some embodiments, the region of the sample comprises at least three pixels, and in further embodiments comprises five, eight, or more pixels. In some embodiments, each pixel comprises a plurality of ionization spots, with a first spot used to acquire the full mass spectrum and one or more additional spots used to acquire fragment ion spectra.

In some embodiments, the data-independent isolation mass windows are assigned to pixels or spots according to a random, pseudo-random, or irregular sequence. In further embodiments, the isolation mass windows are selected using deterministic sequences, repeated mass lists arranged in different orders, or constrained random selection to reduce bias and promote uniform fragment ion coverage across the region of the sample.

In accordance with another aspect, fragment ion spectra acquired from a subset of pixels are correlated with precursor ion information obtained from full mass spectra acquired from the same pixel or from spatially related pixels. In some embodiments, correlation is based on acquisition order, spatial coordinates, timing information, or combinations thereof. In further embodiments, compound identification is performed using fragment ion spectra acquired from pixels exhibiting relatively high precursor ion intensity or from user-selected regions of interest.

In some embodiments, fragment ion spectra acquired from multiple pixels are combined prior to compound identification. Combining may include summing, averaging, or otherwise merging spectral data to improve confidence in compound identification. Once a compound is identified, the identification may be applied across the mass spectrometry image using precursor ion information acquired at additional pixels.

In accordance with a further aspect, a mass spectrometry imaging system is provided that includes a focused ionizing beam source, a mass analyzer, and a controller configured to acquire full mass spectra at a pixel level while distributing data-independent fragment ion acquisition across pixels and correlating spectral data with spatial information to enable compound identification. In some embodiments, the focused ionizing beam comprises a laser beam, an electron beam, an ion beam, a beam of atoms, or a beam of molecules. The controller may comprise one or more processors executing instructions stored in memory to control acquisition timing, isolation window selection, and data correlation.

In accordance with an additional aspect, a non-transitory computer-readable medium is provided that stores instructions which, when executed by one or more processors, cause assignment of spectral data to image pixels, correlation of precursor and fragment ion data acquired using distributed data-independent acquisition, identification of compounds, and generation of spatial representations of compound distributions.

The disclosed techniques enable compound identification without requiring fragment ion spectra to be acquired at every pixel of the mass spectrometry image. In some embodiments, full mass spectra and fragment ion spectra are acquired during a single imaging experiment, while in other embodiments acquisition and analysis parameters are adjusted dynamically during imaging. The disclosed techniques are applicable to a wide range of ionizable compounds, including lipids, metabolites, small molecules, and other chemical species.

All embodiments, methods, systems, and computer-readable media described herein are directed to a single general technical concept in which full mass spectra are acquired at a pixel level while data-independent fragment ion spectra are distributed across pixels and correlated with spatial metadata to enable compound identification.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1A, 1B, and 1C are diagrams illustrating a sampling methodology, in accordance with various embodiments.
FIG. 2 is a diagram illustrating an ion distribution, in accordance with various embodiments.
FIG. 3 is a diagram illustrating acquisition of the spectral data, in accordance with various embodiments.
FIG. 4 is a flow diagram illustrating the method of analyzing the sample, in accordance with various embodiments.
FIG. 5 is a flow diagram illustrating the data analysis, in accordance with various embodiments.
FIG. 6 is an image of a cross section of a parasite worm.
FIGs. 7A, 8A, 9A, and 10A are images of a cross section of a parasite worm showing the distribution of respective identified lipids.
FIGs. 7B, 8B, 9B, and 10B are the respective MS2 spectra used for identification of the identified lipids.

### DETAILED DESCRIPTION

Disclosed herein are systems and methods for directed energy beam ionization with data independent analysis to enable localization and identification of compounds.

The section headings used herein are for organizational purposes only and are not to be construed as limiting the described subject matter in any way.

Unless otherwise defined, all technical and scientific terms used herein have the same meaning as commonly understood by one of ordinary skill in the art. For example, any nomenclatures used in connection with, and techniques of analytical chemistry and biochemistry, described herein are well known and commonly used in the art. In case of conflict, the present disclosure, including definitions, will control. Exemplary methods and materials are described below, although methods and materials similar or equivalent to those described herein can be used in practice or testing of the embodiments and aspects described herein.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the spirit and scope of the various embodiments disclosed herein.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

As used herein, the term "substantially" means to a great or significant extent, but not completely.

As used herein, "exemplary" refers to one or many examples or iterations. "Exemplary" is not intended to be limiting and should not be construed as being representative of the best of its kind.

A "system" sets forth a set of components, real or abstract, comprising a whole where each component interacts with or is related to at least one other component within the whole.

As used herein, a pixel refers to a spatial element of a mass spectrometry image corresponding to a defined area of a sample surface and representing the target spatial resolution of the image. A pixel may correspond to a predefined step size of a sample stage, a predefined beam scanning increment, or a combination thereof.

Each pixel comprises one or more spots, wherein a spot corresponds to a localized ionization event produced by one or more pulses of a focused ionizing beam within the spatial extent of the pixel. Multiple spots within a single pixel may be spatially distinct or partially overlapping and may be generated sequentially during acquisition.

As used herein, a neighborhood refers to a grouping of two or more pixels within a region of the sample. Pixels within a neighborhood may be adjacent, overlapping, or otherwise spatially proximate. A neighborhood does not require a fixed geometry or size and may be defined dynamically based on acquisition parameters, data processing requirements, or regions of interest within the sample. As used herein, a region of a sample comprising a plurality of neighboring pixels may correspond to a neighborhood as defined above.

The following detailed description is provided to illustrate representative embodiments of the subject matter described herein and is not intended to limit the scope of the claims. The embodiments are described with reference to the accompanying drawings, which are provided to illustrate specific examples of structures, systems, and methods. It will be understood that the drawings are not necessarily to scale and that features illustrated in one figure may be combined with features illustrated in other figures.

As emphasized herein, the described embodiments represent a unified technical approach for mass spectrometry imaging in which acquisition and data processing operations operate cooperatively. Features described in connection with one embodiment may be combined with features of other embodiments to implement the described techniques. Variations, modifications, and alternative implementations will be apparent to those skilled in the art in view of this disclosure and are intended to fall within the scope of the appended claims.

Described herein are techniques that combine high spatial resolution mass spectrometry imaging with data-independent acquisition of fragment ion spectra. In particular, full mass spectra acquired at a pixel level are combined with distributed acquisition of data-independent fragment ion spectra to enable spatial localization and identification of compounds based on precursor mass accuracy and fragment ion information. Although certain embodiments are described with reference to scanning microprobe matrix-assisted laser desorption/ionization (SMALDI) imaging, the described techniques are not limited to MALDI and may be implemented using other high spatial resolution ionization approaches, including electron beams and other focused ionizing beams.

In some embodiments, full mass spectra (MS1) and data-independent fragment ion spectra (MS2) are acquired during a single imaging experiment. Not all data-independent isolation mass windows are acquired in each acquisition cycle or at each pixel. Instead, a limited subset of isolation mass windows is selected for acquisition in association with each MS1 spectrum before acquisition proceeds to a subsequent MS1 spectrum at another spatial location. This distributed acquisition scheme preserves spatial resolution associated with the MS1 data while enabling fragment ion coverage across a region of interest. The isolation mass windows may be assigned across the area of interest according to a random, pseudo-random, or otherwise irregular sequence to reduce stochastic effects. For example, a provided mass list may include isolation mass windows multiple times in different orders, such as [1, 2, 3, 2, 3, 1, 1, 3, 2, ...], to promote uniform coverage across pixels.

A focused ionizing beam is applied to an immobilized sample while relative motion between the sample and the beam defines a plurality of pixels across the sample surface. Spatial sampling may be achieved by translating a sample stage relative to a stationary beam, scanning the beam relative to a stationary sample, or a combination thereof. The focused ionizing beam may comprise a laser beam, an electron beam, an ion beam, a beam of atoms, or a beam of molecules. In some embodiments, the sample is combined with a matrix material to facilitate ionization.

For each pixel, a full mass spectrum is acquired from at least one spot within the pixel to obtain precursor mass and intensity information. Fragment ion spectra are acquired from one or more additional spots within the same pixel using data-independent isolation mass windows, wherein fewer than all predefined isolation mass windows are acquired within any individual pixel.

The predefined isolation mass windows are distributed across multiple pixels such that, within a neighborhood of pixels, fragment ion spectra corresponding to all predefined isolation mass windows are acquired.

In various embodiments, the data-independent isolation mass windows are assigned to pixels or spots according to a random, pseudo-random, or irregular sequence. The sequence may be generated using deterministic algorithms, repeated mass lists arranged in different orders, seeded randomization, or constrained random selection.

Isolation mass windows may appear multiple times within an acquisition list and may be acquired in different orders across pixels to reduce bias, avoid stochastic effects, and promote uniform fragment ion coverage across a region of the sample.

Full mass spectra and fragment ion spectra may be acquired sequentially or interleaved during a single imaging experiment. Fragment ion spectra acquired from a given pixel or spot are correlated with precursor mass information obtained from a full mass spectrum acquired from the same pixel or from a spatially adjacent pixel.

Correlation between precursor and fragment ion data may be established using acquisition order, spatial coordinates, timing information, or combinations thereof. This correlation enables identification of compounds even when precursor and fragment ion data are acquired from different spots or different pixels within a neighborhood.

Acquired spectra are assigned to pixels based on acquisition metadata including pulse timing, stage translation rate, beam position, and spectrum ordering within a data file. Data structures may be generated that associate each pixel with one or more full mass spectra and one or more fragment ion spectra.

Compound identification may be performed using fragment ion spectra acquired from a subset of pixels within a neighborhood. Once a compound is identified, the identification may be applied across the image using precursor ion information from full mass spectra acquired at other pixels.

In some embodiments, fragment ion spectra acquired from multiple pixels are selected and combined to improve confidence in compound identification. Selection criteria may include precursor ion intensity, signal-to-noise ratio, spatial clustering, or user-defined regions of interest. Combining fragment ion spectra may include summing, averaging, or otherwise merging spectral data prior to performing a library search or annotation step.

The disclosed techniques do not require fragment ion spectra to be acquired at every pixel of the mass spectrometry image.

Although certain examples describe lipid species, the disclosed acquisition and analysis techniques are applicable to a wide range of ionizable compounds, including metabolites, small molecules, and other chemical species detectable by mass spectrometry imaging.

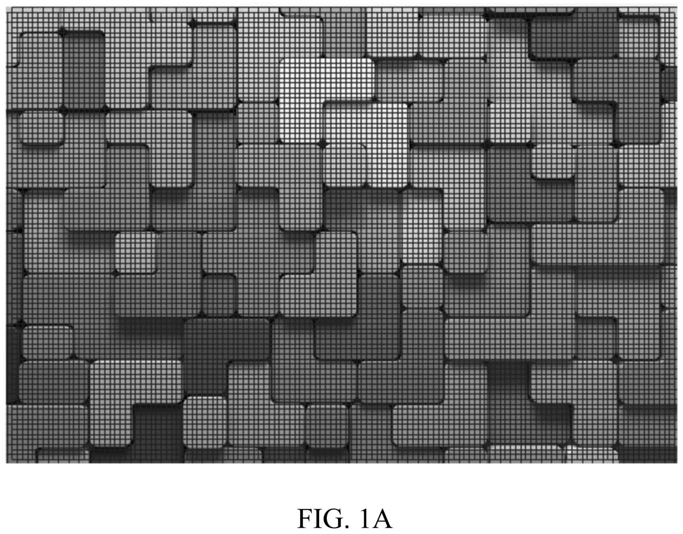

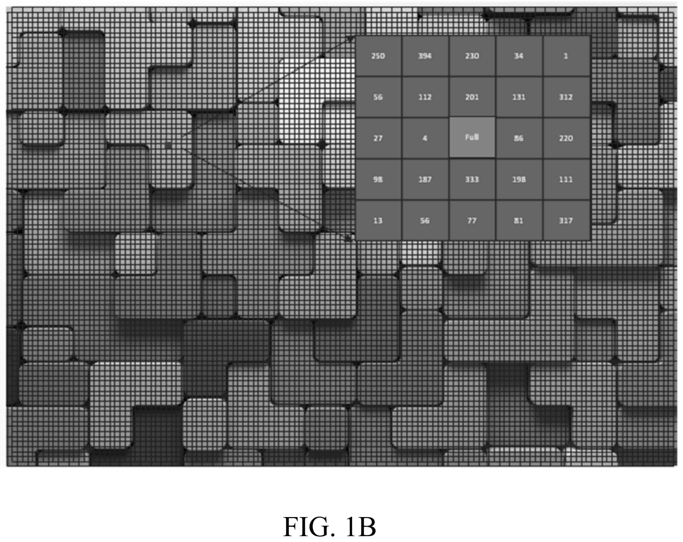

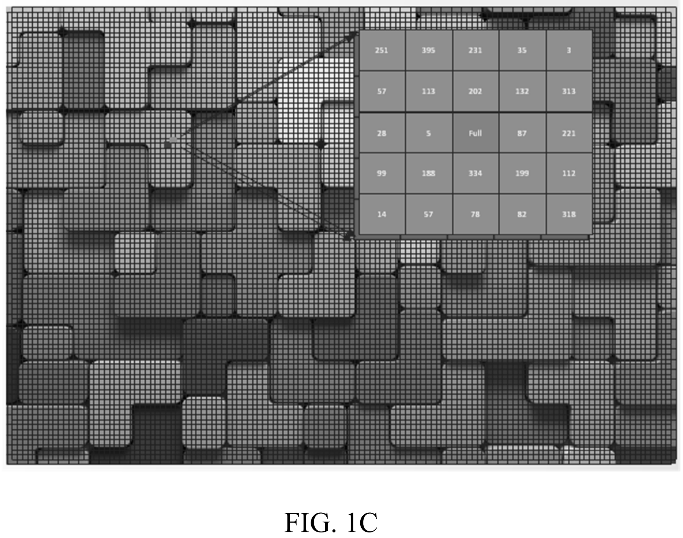

FIGS. 1A, 1B, and 1C illustrate an example acquisition scheme for mass spectrometry imaging. As shown in FIG. 1A, a sample surface is divided into a plurality of pixels corresponding to spatial locations of an image. As shown in FIG. 1B, each pixel comprises a plurality of ionization spots. During acquisition, at least one spot within each pixel is used to acquire a full mass spectrum, while one or more additional spots within the same pixel are used to acquire fragment ion spectra corresponding to a subset of data-independent isolation mass windows. As illustrated in FIG. 1C, adjacent pixels are associated with different subsets of isolation mass windows. By distributing the isolation mass windows across multiple spots and multiple pixels, complete coverage of the predefined isolation mass windows is achieved within a region of interest of the sample without requiring acquisition of all isolation mass windows at any individual pixel. Fragment ion coverage across a region need not be spatially uniform, provided that sufficient coverage is obtained to support compound identification.

In various embodiments, compounds within the sample may be distributed non-uniformly across the sample surface. Compounds can include peptides, proteins, nucleic acids, lipids, metabolites, small molecules, and the like. For example, a biological tissue sample may include different cell types and subcellular structures, with certain compounds localized to specific regions or present at varying relative abundances. Accordingly, compound identification may be performed using fragment ion data acquired from selected pixels or regions of the sample in which the compound is present at sufficient intensity, rather than uniformly across all pixels.

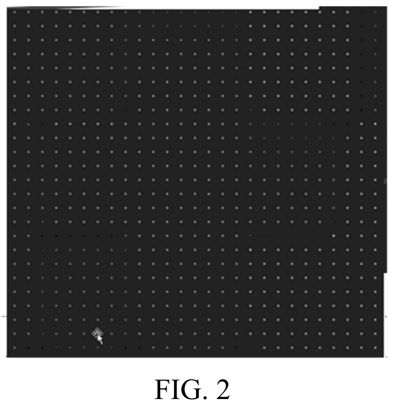

During data analysis, correlation between image pixels and corresponding mass spectral information is maintained. As shown in FIG. 2, images generated from full mass spectra may be used to visualize spatial distributions of ions across the sample. Precursor ion information obtained from full mass spectra and fragment ion information obtained from data-independent acquisition may be used together to identify compounds based on precursor mass accuracy and fragment ion masses. In some embodiments, user interfaces provide linked views of spatial images and associated spectral data to facilitate inspection, annotation, and confirmation of identified compounds.

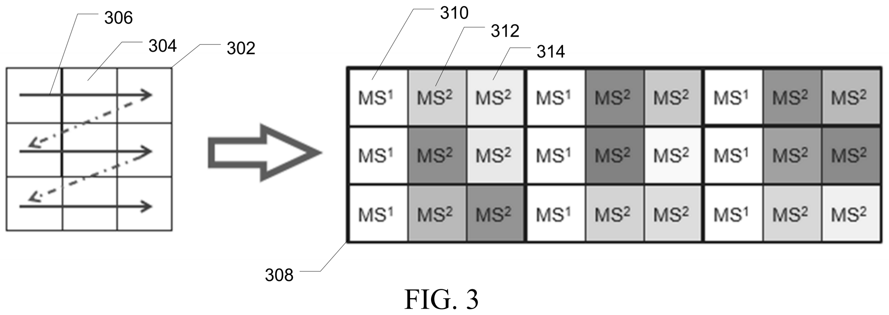

FIG. 3 illustrates an example of acquisition and organization of spectral data during a mass spectrometry imaging experiment. A portion of a sample 302 is shown comprising a plurality of pixels 304 corresponding to spatial locations of an image. In some embodiments, relative motion between the sample and a focused ionizing beam is provided by translating a sample stage at a fixed speed, such as in a line-scanning mode in which initiation of a new scan line 306 triggers ionization events. A defined number of ionization pulses may be applied per unit distance and may be maintained for a duration corresponding to an injection time specified by an acquisition method.

In various embodiments, both full mass spectra and data-independent fragment ion spectra are acquired during a single imaging experiment and stored within a single raw data file 308. Each individual spectrum, whether a full mass spectrum or a fragment ion spectrum, corresponds to ions generated from a localized sample location and represents spectral data associated with a spot within a pixel. Precursor ion information for fragment ion spectra 312 and 314 is correlated with a corresponding full mass spectrum 310, typically acquired from the same pixel or from a spatially adjacent pixel.

To maintain a desired spatial resolution for the mass spectrometry image, at least one full mass spectrum and a selected subset of fragment ion spectra are acquired for each pixel. In some embodiments, two data-independent fragment ion spectra are acquired for each full mass spectrum, while in other embodiments a different number of fragment ion spectra may be acquired, including 2, 4, 6, 9, 16, 25, or more. Different isolation mass windows are assigned to neighboring pixels, and the isolation mass windows may be selected in a random, pseudo-random, or irregular manner to reduce stochastic effects and promote uniform coverage across a region of the sample.

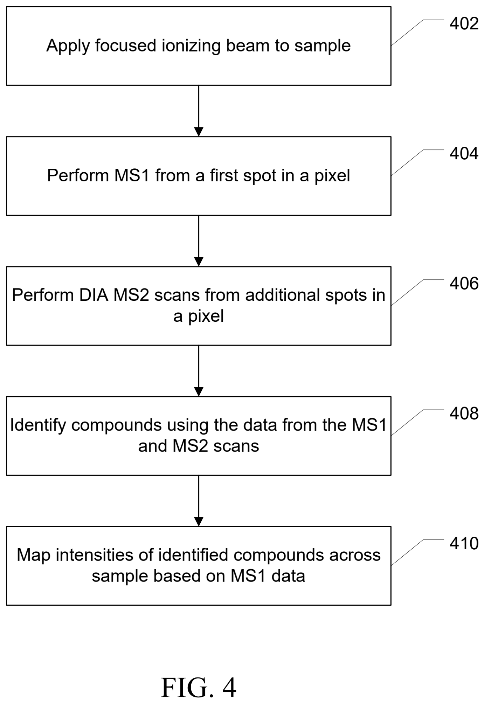

FIG. 4 is a flow diagram illustrating an example method for analyzing a sample using mass spectrometry imaging. At 402, a focused ionizing beam is applied to an immobilized sample. In some embodiments, a stage holding the sample is translated at a fixed rate relative to the focused ionizing beam, while in other embodiments the focused ionizing beam is scanned across the sample while the sample remains stationary. The sample surface is divided into pixels corresponding to image locations, and each ionization pulse generates ions from a localized spot on the sample. Multiple pulses, and thus multiple spots, may be associated with each pixel.

At 404, a full mass spectrum is acquired from ions generated at a first spot within each pixel. The full mass spectrum provides precursor ion mass-to-charge values and corresponding intensities over a selected mass range. At 406, data-independent fragment ion spectra are acquired from ions generated at one or more additional spots within the same pixel. For each fragment ion spectrum, precursor ions within an isolation mass window are fragmented and fragment ion mass-to-charge values are detected. Accordingly, each pixel is associated with at least one full mass spectrum and a plurality of fragment ion spectra.

In various embodiments, the data-independent isolation mass windows are mapped across pixels such that each isolation mass window is acquired within a grouping of pixels, while not all isolation mass windows are acquired within any single pixel. The mapping of isolation mass windows to pixels may be random, pseudo-random, or otherwise irregular to reduce stochastic effects and to distribute fragment ion coverage across a region of interest.

At 408, one or more compounds are identified based on precursor ion information obtained from the full mass spectra and fragment ion information obtained from the data-independent fragment ion spectra. In some embodiments, compound identification includes performing a library search using fragment ion mass information. At 410, intensities of the identified compounds are mapped to spatial locations of the sample to generate images representing compound distributions. In some embodiments, full mass spectra are assigned to pixels based on ionization pulse timing, stage translation rate, and ordering of spectra within the data file.

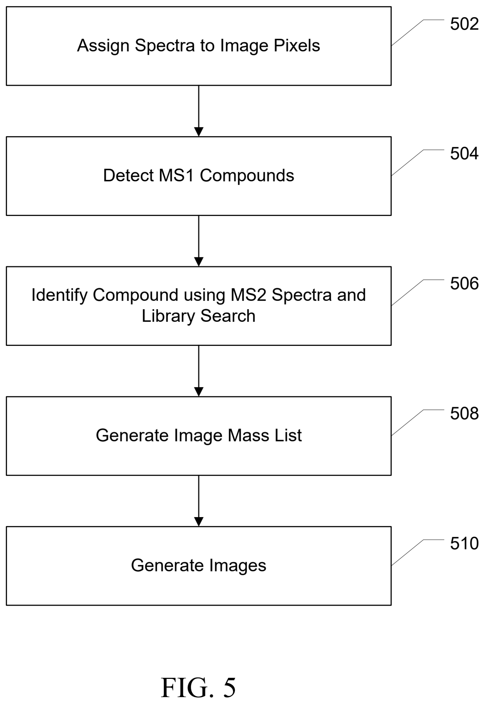

FIG. 5 is a flow diagram illustrating an example data processing method for mass spectrometry imaging data acquired using distributed data-independent acquisition. At 502, full mass spectra and fragment ion spectra are assigned to corresponding pixels of an image. Assignment may be performed based on acquisition metadata including ionization pulse timing, relative motion between the sample and a focused ionizing beam, translation rate across the sample, spatial coordinates, and ordering of spectra within a data file. This information may be used to associate each spectrum with a spot and to associate each spot with a pixel.

At 504, one or more compounds are detected in the full mass spectra. Detecting compounds may include identifying spectral peaks, determining mass-to-charge values for the peaks, and determining one or more data-independent isolation mass windows corresponding to the detected precursor ions.

At 506, one or more compounds are identified using fragment ion spectra corresponding to the detected precursor ions. Compound identification may include performing a library search using fragment ion mass information. In various embodiments, a compound may be detected in full mass spectra acquired from multiple pixels. Fragment ion spectra selected for identification may be acquired from pixels within a region of relatively high precursor ion intensity, and in some embodiments from the same pixel as a selected full mass spectrum. In further embodiments, the identity of a compound is determined once and applied across the image for precursor ions having a corresponding mass-to-charge value.

At 508, an image mass list is generated. The image mass list may include compounds identified throughout the sample. For each compound included in the image mass list, intensity values are determined for each pixel based on full mass spectra assigned to the respective pixels.

At 510, spatial images are generated that represent intensity distributions of one or more compounds across the sample. The images may be displayed on a computer screen, and underlying spectral data, including full mass spectra and fragment ion spectra, may be linked to image pixels such that spectral data associated with a selected pixel can be reviewed. In some embodiments, user-selected image regions are used to reprocess compound identification steps, including repeating a library search using modified or refined processing parameters.

### EXAMPLES

Although certain examples and figures illustrate lipid species, the disclosed techniques are not limited to lipid analysis and are applicable to a wide range of ionizable compounds.

### Example 1

Tissue sections were obtained at -20°C using a cryotome and thaw-mounted on regular glass slides. MALDI matrix was applied using a SMALDIPrep device (TransMIT GmbH, Giessen, Germany). Measurements (raw and position-file acquisition) were performed using an AP-SMALDI5 AF ion source (TransMIT GmbH) coupled with a THERMO SCIENTIFIC^{™} ORBITRAP EXPLORIS^{™} 480 mass spectrometer.

Ion image generation and compound annotation were processed and performed by THERMO SCIENTIFIC^{™} Compound Discoverer (CD). In LC-MS/MS approaches, CD is used for the identification and characterization of small molecules in metabolomics. Existing nodes like Thermo Scientific LipidSearch and mzCloud were applied to enable compound identification.

### Example 2

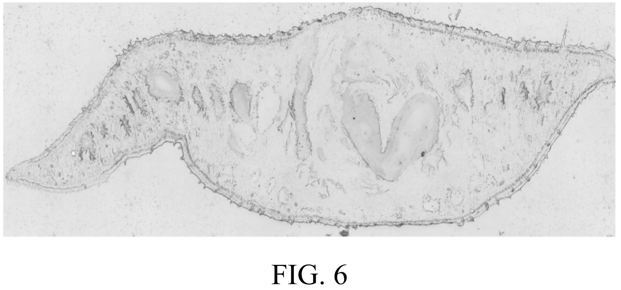

Fasciola hepatica parasite worm (frozen in 8 wt-% gelatin) is transversally cryosectioned at -23 ° C into 20 µm thick sections, thaw-mounted on to regular glass slides and stored at -80 °C until use. The sections are spray-coated with 2,5-DHB matrix using the SMALDIPrep sprayer device (TransMIT GmbH, Giessen, Germany). FIG. 6 shows an image of the cross section.

Data acquisition consists of alternating one MS1 scan followed by two DIA MS2 scans with randomly changing m/z range values of the DIA isolation windows during acquisition. The DIA m/z range is 797 Da to 827 Da, with 3 Da isolation windows. Pixel size is 30 µm by 10 µm, and the image size is 64 pixels by 534 pixels. LipidSearch software was used to perform the library search for compound identification.

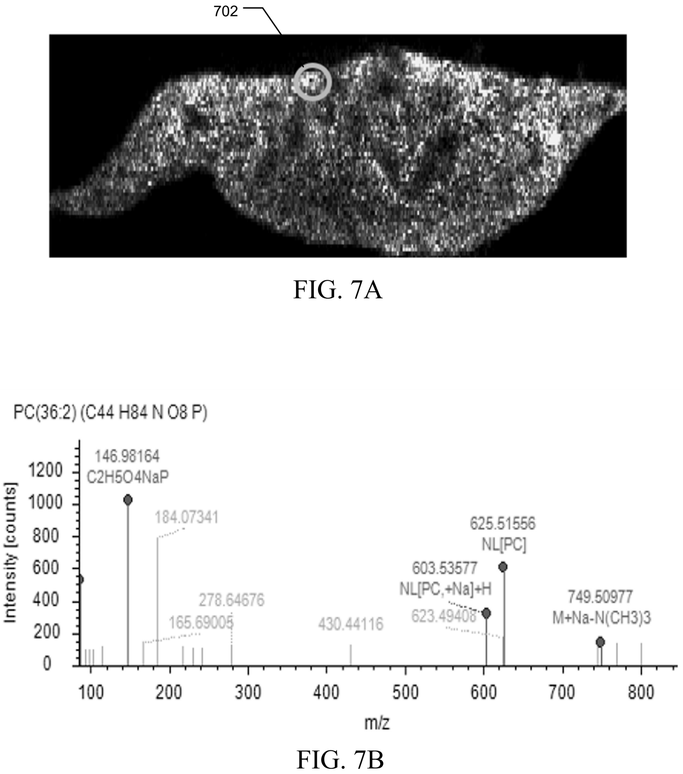

FIG. 7A shows the intensity map of the compound identified as phosphatidylcholine 36:2 or phosphatidylcholine 38:5 with a formula (MH+): C₄₄ H₈₄ N O₈ P. FIG. 7B shows the MS2 scan used for compound identification which was acquired from region 702 of the sample.

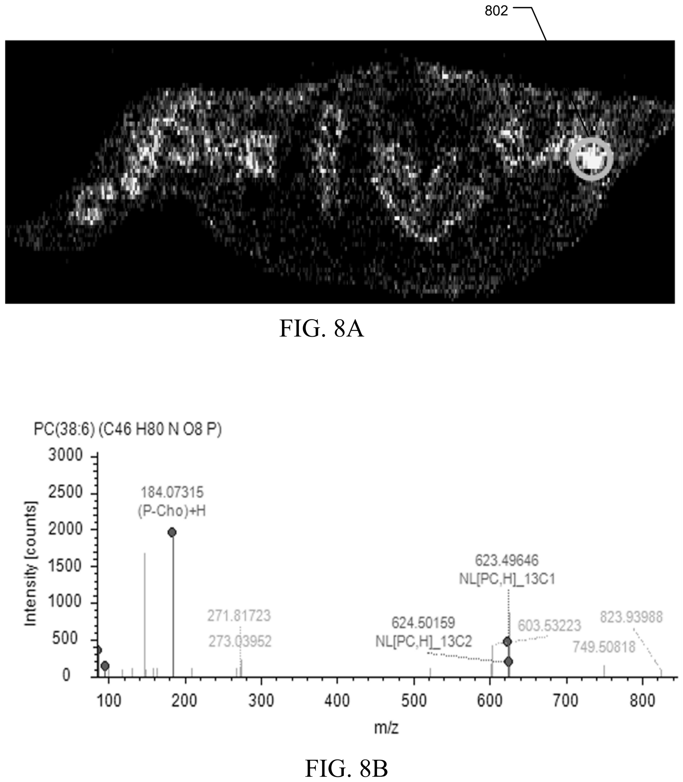

FIG. 8A shows the intensity map of the compound identified as phosphatidylcholine 38:6 or phosphatidylcholine 36:3 with a formula (MH+): C₄₆ H₈₀ N O₈ P. FIG. 8B shows the MS2 scan used for compound identification which was acquired from the region 802 of the sample.

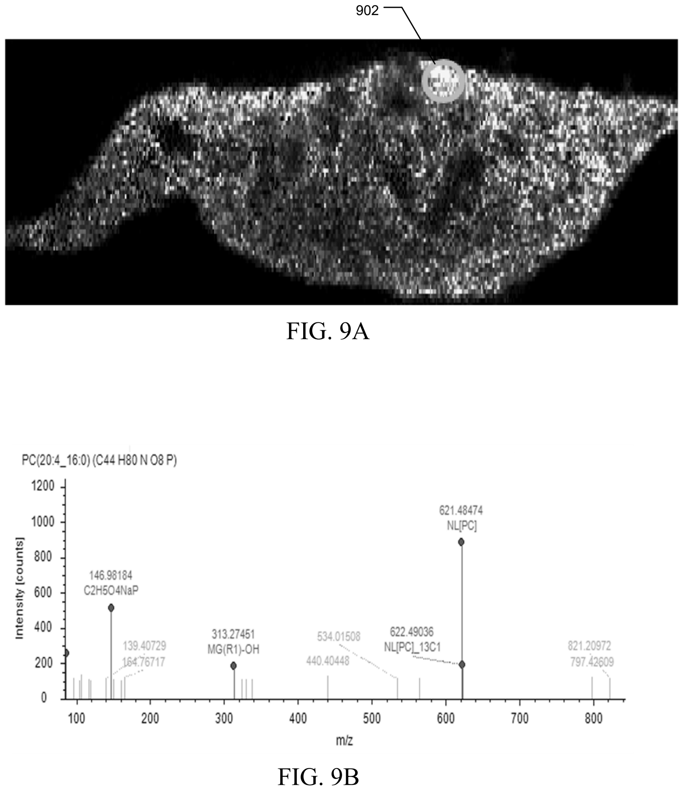

FIG. 9A shows the intensity map of the compound identified as phosphatidylcholine (20:4) or phosphatidylcholine (16:0) with a formula (MH+): C₄₄ H₈₀ N O₈ P. FIG. 7B shows the MS2 scan used for compound identification which was acquired from the region 902 of the sample.

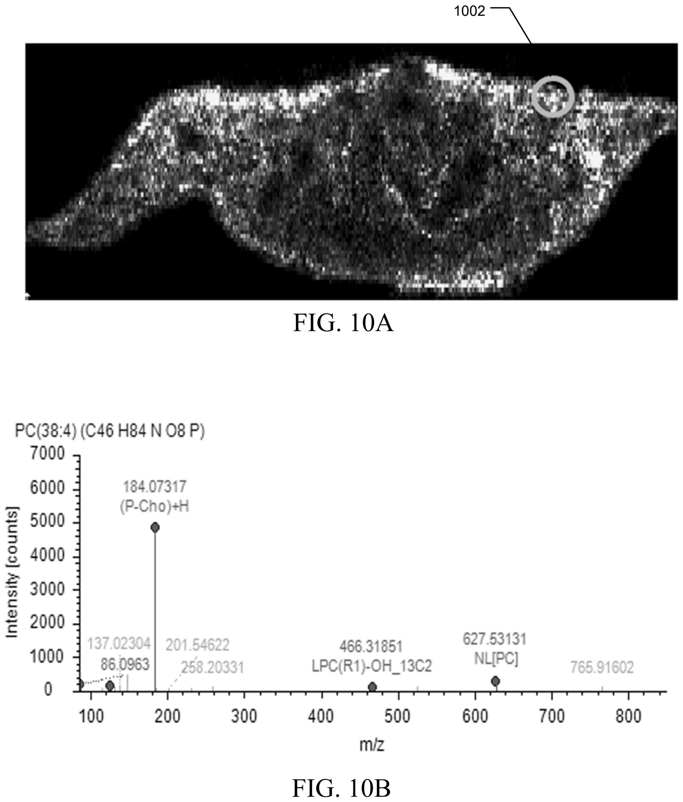

FIG. 10A shows the intensity map of the compound identified as phosphatidylcholine (38:4) with a formula (MH+): C₄₆ H₈₄ N O₈ P. FIG. 10B shows the MS2 scan used for compound identification which was acquired from the region 1002 of the sample.

### Further aspects of the invention are set out in the following numbered clauses:

Clause 1. A method of analyzing a sample using mass spectrometry imaging, the method comprising:
(a) applying a focused ionizing beam to an immobilized sample to ionize a plurality of spots distributed across a plurality of pixels of the sample;
(b) for each pixel of the plurality of pixels, acquiring a full mass spectrum of ions from at least one spot within the pixel to obtain precursor mass information;
(c) for each pixel of the plurality of pixels, acquiring fragment ion spectra from one or more additional spots within the pixel by fragmenting ions within one or more data-independent isolation mass windows, wherein fewer than all of a plurality of predefined isolation mass windows are acquired within any individual pixel;
(d) distributing the predefined isolation mass windows across multiple pixels such that, within a region of the sample comprising a plurality of neighboring pixels, fragment ion spectra corresponding to all of the predefined isolation mass windows are acquired; and
(e) identifying one or more compounds in the sample based on the precursor mass information and fragment ion spectra, and associating the identified one or more compounds with spatial locations of the sample.

Clause 2. The method of clause 1, wherein the predefined isolation mass windows are assigned to pixels in a random, pseudo-random, or irregular order.

Clause 3. The method of clause 1, wherein the region of the sample comprises at least three pixels.

Clause 4. The method of clause 1, wherein each pixel comprises a plurality of spots, and wherein a first spot is used to acquire the full mass spectrum and remaining spots are used to acquire fragment ion spectra.

Clause 5. The method of clause 1, wherein the focused ionizing beam comprises a laser beam, an electron beam, an ion beam, a beam of atoms, or a beam of molecules.

Clause 6. The method of clause 1, wherein the fragment ion spectra are acquired using data-independent acquisition with isolation mass windows having a fixed or variable mass width.

Clause 7. The method of clause 1, further comprising correlating each fragment ion spectrum with a corresponding full mass spectrum based on pixel location or spatial proximity.

Clause 8. The method of clause 1, wherein identifying the one or more compounds comprises performing a library search using fragment ion masses.

Clause 9. The method of clause 1, further comprising generating an image representing spatial intensity distributions of the identified one or more compounds based on the full mass spectra.

Clause 10. The method of clause 1, wherein fragment ion spectra acquired from multiple pixels are combined to improve identification of at least one compound.

Clause 11. The method of clause 1, wherein the immobilized sample comprises a biological tissue section.

Clause 12. The method of clause 1, wherein the full mass spectra and the fragment ion spectra are acquired during a single imaging experiment.

Clause 13. A mass spectrometry imaging system comprising:
(a) a sample support configured to hold an immobilized sample;
(b) a focused ionizing beam source configured to ionize material from the sample at a plurality of spatial locations defining a plurality of pixels;
(c) a mass analyzer configured to acquire:
   (i) a full mass spectrum of ions from at least one spot within each pixel, and
   (ii) fragment ion spectra from one or more additional spots within each pixel using data-independent isolation mass windows, wherein fewer than all of the predefined isolation mass windows are acquired within any individual pixel; and
(d) a controller configured to distribute the predefined isolation mass windows across multiple pixels such that all predefined isolation mass windows are acquired within a region comprising a plurality of pixels, and to associate precursor and fragment ion spectra with spatial locations of the sample.

Clause 14. The system of clause 13, wherein the controller is configured to assign the predefined isolation mass windows to pixels in a random or pseudo-random order.

Clause 15. The system of clause 13, wherein the mass analyzer is configured to acquire multiple fragment ion spectra for each full mass spectrum.

Clause 16. The system of clause 13, further comprising a movable stage configured to translate the sample relative to the focused ionizing beam.

Clause 17. The system of clause 13, wherein the focused ionizing beam source comprises an atmospheric-pressure MALDI ion source.

Clause 18. The system of clause 13, further comprising a data processing module configured to generate spatial images of compound distributions based on the full mass spectra.

Clause 19. The system of clause 13, wherein the controller is further configured to combine fragment ion spectra acquired from multiple pixels to identify a compound.

Clause 20. A non-transitory computer-readable medium storing instructions that, when executed by one or more processors of a mass spectrometry imaging system, cause the system to:
(a) assign full mass spectra and fragment ion spectra acquired using data-independent isolation mass windows across pixels to pixels of an image based on spatial acquisition parameters;
(b) associate fragment ion spectra with corresponding precursor mass information from full mass spectra acquired from the same or neighboring pixels;
(c) determine compound identities based on correlated precursor and fragment ion mass information acquired from different pixels while maintaining spatial resolution defined by the full mass spectra; and
(d) generate spatial representations of identified compounds across the sample.

Clause 21. The computer-readable medium of clause 20, wherein the instructions cause the system to select fragment ion spectra from pixels having a highest precursor ion intensity.

Clause 22. The computer-readable medium of clause 20, wherein the instructions cause the system to perform a library search using precursor and fragment ion masses.

Clause 23. The computer-readable medium of clause 20, wherein the instructions cause the system to merge fragment ion spectra acquired from multiple pixels.

Clause 24. The computer-readable medium of clause 20, wherein the instructions cause the system to link spatial image pixels to underlying spectral data for user inspection.

## Claims

1. A method of analyzing a sample using mass spectrometry imaging, the method comprising:
(a) applying a focused ionizing beam to an immobilized sample to ionize a plurality of spots distributed across a plurality of pixels of the sample;
(b) for each pixel of the plurality of pixels, acquiring a full mass spectrum of ions from at least one spot within the pixel to obtain precursor mass information;
(c) for each pixel of the plurality of pixels, acquiring fragment ion spectra from one or more additional spots within the pixel by fragmenting ions within one or more data-independent isolation mass windows, wherein fewer than all of a plurality of predefined isolation mass windows are acquired within any individual pixel;
(d) distributing the predefined isolation mass windows across multiple pixels such that, within a region of the sample comprising a plurality of neighboring pixels, fragment ion spectra corresponding to all of the predefined isolation mass windows are acquired; and
(e) identifying one or more compounds in the sample based on the precursor mass information and fragment ion spectra, and associating the identified one or more compounds with spatial locations of the sample.

2. The method of claim 1, wherein the predefined isolation mass windows are assigned to pixels in a random, pseudo-random, or irregular order.

3. The method of claim 1, wherein each pixel comprises a plurality of spots, and wherein a first spot is used to acquire the full mass spectrum and remaining spots are used to acquire fragment ion spectra.

4. The method of claim 1, wherein the focused ionizing beam comprises a laser beam, an electron beam, an ion beam, a beam of atoms, or a beam of molecules.

5. The method of claim 1, further comprising correlating each fragment ion spectrum with a corresponding full mass spectrum based on pixel location or spatial proximity.

6. The method of claim 1, wherein identifying the one or more compounds comprises performing a library search using fragment ion masses.

7. The method of claim 1, further comprising generating an image representing spatial intensity distributions of the identified one or more compounds based on the full mass spectra.

8. The method of claim 1, wherein fragment ion spectra acquired from multiple pixels are combined to improve identification of at least one compound.

9. The method of claim 1, wherein the immobilized sample comprises a biological tissue section.

10. The method of claim 1, wherein the full mass spectra and the fragment ion spectra are acquired during a single imaging experiment.

11. A mass spectrometry imaging system comprising:
(a) a sample support configured to hold an immobilized sample;
(b) a focused ionizing beam source configured to ionize material from the sample at a plurality of spatial locations defining a plurality of pixels;
(c) a mass analyzer configured to acquire:
(i) a full mass spectrum of ions from at least one spot within each pixel, and
(ii) fragment ion spectra from one or more additional spots within each pixel using data-independent isolation mass windows, wherein fewer than all of the predefined isolation mass windows are acquired within any individual pixel; and
(d) a controller configured to distribute the predefined isolation mass windows across multiple pixels such that all predefined isolation mass windows are acquired within a region comprising a plurality of pixels, and to associate precursor and fragment ion spectra with spatial locations of the sample.

12. The system of claim 11, wherein the mass analyzer is configured to acquire multiple fragment ion spectra for each full mass spectrum.

13. The system of claim 11, further comprising a movable stage configured to translate the sample relative to the focused ionizing beam.

14. The system of claim 11, further comprising a data processing module configured to generate spatial images of compound distributions based on the full mass spectra.

15. The system of claim 11, wherein the controller is further configured to combine fragment ion spectra acquired from multiple pixels to identify a compound.
